# EUROPEAN PATENT SPECIFICATION

(11) **EP 4 354 270 B1**
(45) Date of publication and mention of the grant of the patent: **04.03.2026**
(21) Application number: 22848316.0
(22) Date of filing: 18.07.2022
(51) Int. Cl.: G06F 3/0484, H04L 51/046, H04L 51/02

(54) **SERVICE RECOMMENDATION METHOD AND ELECTRONIC DEVICE**
DIENSTEMPFEHLUNGSVERFAHREN UND ELEKTRONISCHE VORRICHTUNG
PROCÉDÉ DE RECOMMANDATION DE SERVICE ET DISPOSITIF ÉLECTRONIQUE

(30) Priority: 28.07.2021 CN 202110858087
(43) Date of publication of application: 17.04.2024
(73) Proprietor: Huawei Technologies Co., Ltd., Longgang Shenzhen, Guangdong 518129 (CN)
(72) Inventor: HU, Kai, Shenzhen, Guangdong 518129 (CN); LI, Ronggen, Shenzhen, Guangdong 518129 (CN); ZHANG, Li, Shenzhen, Guangdong 518129 (CN)
(74) Representative: Isarpatent
(86) International application number: PCT/CN2022/106255
(87) International publication number: WO 2023/005711

(56) References cited:
- CN-A- 105 491 126
- CN-A- 110 825 469
- CN-A- 111 651 104
- CN-A- 113 761 427
- US-A1- 2014 136 990
- US-A1- 2018 190 028
- US-A1- 2019 394 147

## Description

### TECHNICAL FIELD

This application relates to the terminal field, and in particular, to a service recommendation method, an electronic device, a computer-readable storage medium, and a computer program product.

### BACKGROUND

One or more applications are usually installed in an electronic device such as a mobile phone. These applications may provide a user with abundant application services. A video app is used as an example. The video app may provide the user with application services such as playing, message leaving, and sharing of a video file.

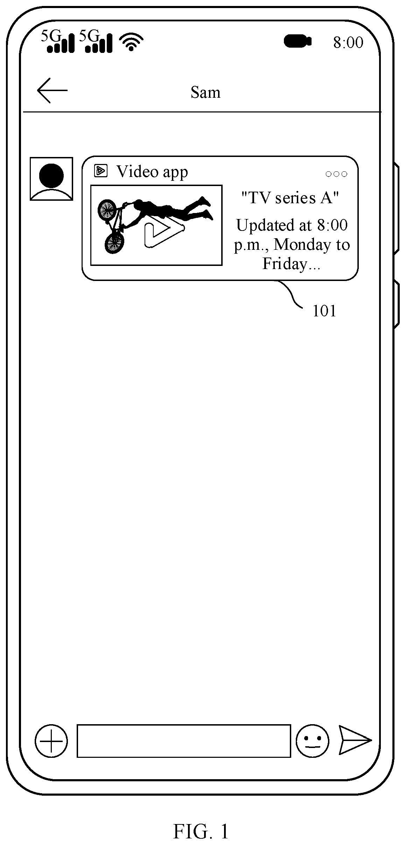

In some scenarios, the mobile phone may present a related application service to the user in a form of a card. For example, as shown in FIG. 1, a chat app of a mobile phone may receive a video card 101 that is provided by a video app and that is sent by a contact. If it is detected that a user taps the video card 101, the mobile phone may jump to the video app corresponding to the video card 101 to provide a corresponding video play service for the user.

If the user needs to perform related operations such as projection and ticket purchase on the video play service in the video card 101, the user further needs to operate the mobile phone to exit the chat app (or the video app), and further operate the mobile phone to perform operations such as application switching and page jumping, to open a related application service in a related application. It is clear that this jumping process between application services is complicated, and user experience is poor.

US 2019/394147 A1 discloses embedded programs and interfaces for chat conversations. A method includes initiating an embedded application in association with a chat interface displayed by a messaging application that executes at least in part on a first user device.

### SUMMARY

This application provides a service recommendation method, an electronic device, a computer-readable storage medium, and a computer program product, as defined in the appended set of claims. When displaying a service, the electronic device may recommend, to a user, another service associated with the service, to simplify a jumping procedure between application services, and improve user experience.

To achieve the foregoing objective, the following technical solutions are used in this application.

According to a first aspect, this application provides a service recommendation method, including: When displaying a chat interface with a first contact in a chat application, an electronic device may receive and display a first message input by a user in the chat interface, for example, a message including a query instruction. Further, the electronic device may obtain a first service card corresponding to the first message, where the first service card may be provided by a first application. In addition, the electronic device may obtain a second service card associated with the first service card, where the second service card may be provided by a second application. Further, the electronic device may display the first service card and the second service card in the chat interface.

In other words, when displaying a service (for example, the first service card), the electronic device may simultaneously recommend, to the user, another service (for example, the second service card) associated with the service. In this way, the user may implement a switching and jumping process between a plurality of services without performing jumping between a plurality of applications. This improves user experience.

In a possible implementation, that the electronic device obtains a first service card corresponding to the first message includes: When the first message has a first intent (for example, a video play intent or a shopping intent), the electronic device may determine, from N (N is an integer greater than 0) services bound to the first intent, a first service corresponding to the first message. When the determined first service is provided by the first application, the electronic device may obtain, from the first application, the first service card corresponding to the first service. The first application may be a chat app, or may be another application installed in the electronic device.

Alternatively, the electronic device may obtain, from a server or another electronic device (for example, an electronic device used by the first contact), the first service card corresponding to the first message.

In a possible implementation, that the electronic device obtains a second service card that is associated with the first service card and that is provided by a second application includes:
The electronic device determines a second intent associated with the first intent, where similar to the first intent, the second intent may have a binding relationship with M (M is an integer greater than 0) services. Further, the electronic device may determine, from the M services, a second service corresponding to the first message. When the determined second service is provided by the second application, the electronic device may obtain, from the second application, the second service card corresponding to the second service.

Because the first intent is associated with the second intent, the first service determined by the electronic device based on the first intent is also associated with the second service determined based on the second intent. The electronic device may recommend, to the user, the second service card as an associated card of the first service card.

In a possible implementation, that the electronic device determines a second intent associated with the first intent includes: The electronic device may send the first intent to a preset smart engine (the smart engine may be provided at an application framework layer), to request the smart engine to determine the second intent associated with the first intent. Alternatively, the electronic device may send the first intent to a first application at an application layer, to request the first application to determine the second intent associated with the first intent. Alternatively, the electronic device may send the first intent to another device (for example, a server), to request the another device to determine the second intent associated with the first intent.

In a possible implementation, that the electronic device displays the first service card and the second service card in the chat interface includes: The electronic device displays a reply message of the first message in the chat interface. The first service card may be located on the second service card in the reply message. In other words, the electronic device may display the first service card and the second service card together in a form of a card group, and the second service card may be displayed below as the associated card of the first service card.

In a possible implementation, that the electronic device displays the first service card and the second service card in the chat interface includes: The electronic device may first display the first service card in the chat interface. Subsequently, the electronic device may display the first service card on the second service card after receiving an input performed by the user on the first service card. Subsequently, the user may perform a related operation by directly using the second service card as an entry.

In a possible implementation, after the electronic device displays the first service card on the second service card, the method further includes: The electronic device may receive a switching operation input by the user to the first service card. Further, the electronic device may display the second service card on the first service card in response to the switching operation. In this way, the user can implement, in the chat app, the second service associated with the first service without opening the second application to perform related searching and switching operations. This simplifies an operation procedure in which the user uses services in different applications, and enhances a relationship between the services.

In a possible implementation, the first contact may be a display device (for example, a television) added to the chat application. Certainly, the first contact may alternatively be a friend, a group, an official account, a robot, an applet, or the like that is added by the user to the chat app.

When the first intent associated with the first message is the video play intent (VideoPlay), the second intent associated with the first intent may be a device remote control intent (TvControl). In this case, the second service card is a device remote control card bound to the remote control intent. In this way, when preparing to play or playing a video on the display device, the user may implement a remote control function by directly using the device remote control card displayed in the chat interface.

Alternatively, when the first intent associated with the first message is the video play intent (VideoPlay), the second intent associated with the first intent may be a ticket purchase intent or the like. This is not limited in this application.

In a possible implementation, after the electronic device obtains the first service card corresponding to the first message, the method further includes: The electronic device obtains a third service card associated with the first service card, where the third service card may be provided by a third application. In this case, when the electronic device displays the second service card, the method further includes: The electronic device displays the third service card. In other words, the electronic device may obtain a plurality of service cards associated with the first service card. The electronic device may present, to the user, the plurality of service cards as recommended cards, so that the user can conveniently perform switching and jumping between the plurality of services.

According to a second aspect, this application provides an electronic device, including: a display, one or more processors, one or more memories, and one or more computer programs. The processor is coupled to both the display and the memory. The one or more computer programs are stored in the memory. When the electronic device runs, the processor executes the one or more computer programs stored in the memory, so that the electronic device performs the service recommendation method according to any one of the foregoing aspects.

According to a third aspect, this application provides a computer-readable storage medium, including computer instructions. When the computer instructions are run on an electronic device, the electronic device is enabled to perform the service recommendation method according to any one of the foregoing aspects.

According to a fourth aspect, this application provides a computer program product. When the computer program product runs on an electronic device, the electronic device is enabled to perform the service recommendation method according to any one of the foregoing aspects.

It may be understood that, the electronic device in the second aspect, the computer-readable storage medium in the third aspect, and the computer program product in the fourth aspect are all configured to perform the corresponding method provided above. Therefore, for beneficial effects that can be achieved by the electronic device, the computer-readable storage medium, and the computer program product, refer to the beneficial effects of the corresponding method provided above. Details are not described again herein.

### BRIEF DESCRIPTION OF DRAWINGS

FIG. 1 is a first schematic diagram of an application scenario of displaying a service card in a conventional technology;
FIG. 2 is a second schematic diagram of an application scenario of displaying a service card in a conventional technology;
FIG. 3 is a first schematic diagram of an application scenario of a service recommendation method according to an embodiment of this application;
FIG. 4 is a first schematic diagram of a structure of an electronic device according to an embodiment of this application;
FIG. 5 is a schematic diagram of an architecture of an operating system in an electronic device according to an embodiment of this application;
FIG. 6 is a schematic diagram of a principle of a service recommendation method according to an embodiment of this application;
FIG. 7 is a schematic diagram of interaction in a service recommendation method according to an embodiment of this application;
FIG. 8 is a second schematic diagram of an application scenario of a service recommendation method according to an embodiment of this application;
FIG. 9 is a third schematic diagram of an application scenario of a service recommendation method according to an embodiment of this application;
FIG. 10 is a fourth schematic diagram of an application scenario of a service recommendation method according to an embodiment of this application;
FIG. 11(a) to FIG. 11(c) are a fifth schematic diagram of an application scenario of a service recommendation method according to an embodiment of this application;
FIG. 12 is a sixth schematic diagram of an application scenario of a service recommendation method according to an embodiment of this application;
FIG. 13 is a seventh schematic diagram of an application scenario of a service recommendation method according to an embodiment of this application;
FIG. 14 is an eighth schematic diagram of an application scenario of a service recommendation method according to an embodiment of this application;
FIG. 15 is a ninth schematic diagram of an application scenario of a service recommendation method according to an embodiment of this application;
FIG. 16 is a tenth schematic diagram of an application scenario of a service recommendation method according to an embodiment of this application; and
FIG. 17 is a second schematic diagram of a structure of an electronic device according to an embodiment of this application.

### DESCRIPTION OF EMBODIMENTS

The following describes implementations of embodiments in detail with reference to the accompanying drawings.

A service recommendation method provided in an embodiment of this application may be applied to an electronic device such as a mobile phone, a tablet computer, a television (which may also be referred to as a smart screen, a large-screen device, or the like), a notebook computer, an ultra-mobile personal computer (Ultra-mobile Personal Computer, UMPC), a handheld computer, a netbook, a personal digital assistant (Personal Digital Assistant, PDA), a wearable electronic device, a vehicle-mounted device (which may also be referred to as an in-vehicle infotainment system), or a virtual reality device. This is not limited in this embodiment of this application.

An example in which a mobile phone is used as the foregoing electronic device is used. Various applications installed in the mobile phone may provide a user with corresponding application functions. An application service is a service business that is provided by an application for the user to implement a specific function.

For example, a chat app may provide a chat service with a contact. The contact may be a friend, a group, an official account, a robot, an applet, or the like that is added by the user to the chat app. For another example, a video app may provide services such as playing, sharing, and message leaving of various video files, and adding the video files to favorites.

In addition to the application service, the electronic device such as the mobile phone may further provide the user with one or more services related to a device. For example, the mobile phone may provide the user with a remote control service that has functions of controlling volume and brightness of a television, changing a channel, turning on or off the television, and the like. For another example, the mobile phone may further provide the user with a system service such as a voice assistant and taking screenshot. This is not limited in this embodiment of this application.

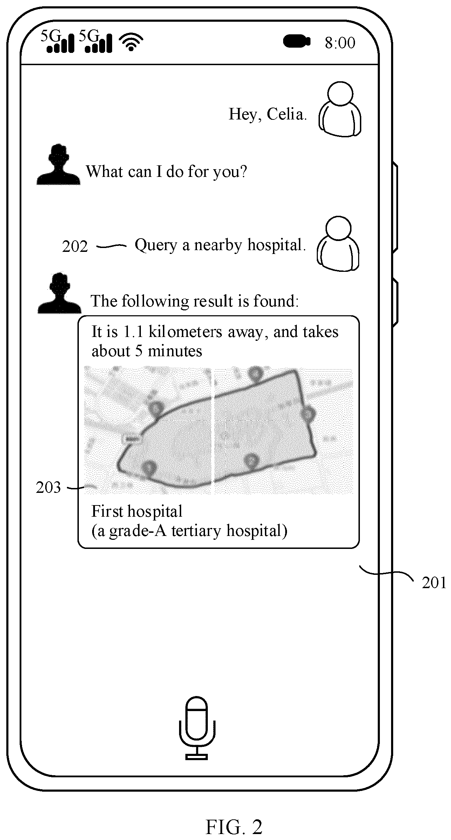

Currently, some applications may present corresponding services to the user in a form of a card when running. For example, as shown in FIG. 2, after running a voice assistant app (which may also be referred to as a smart assistant app), the mobile phone may display a dialog interface 201 of the voice assistant with the user. Still as shown in FIG. 2, if it is detected that the user inputs a voice instruction 202 "query a nearby hospital", the voice assistant app may obtain and display a map card 203 corresponding to the voice instruction 202. For example, the map card 203 may be a hospital query result provided by a map app based on a location of the user. In this way, the user may obtain, in the dialog interface 201, a service provided by another application (for example, the map app).

However, when the user needs to further use a service related to the map card 203 subsequently, for example, after seeing information in the map card 203, the user may want to use a taxi hailing service provided by an online car-hailing app, the user needs to input a related voice instruction again or open a related application (for example, the online car-hailing app) to use the taxi hailing service. Consequently, a process in which the user performs jumping between the two services is complicated.

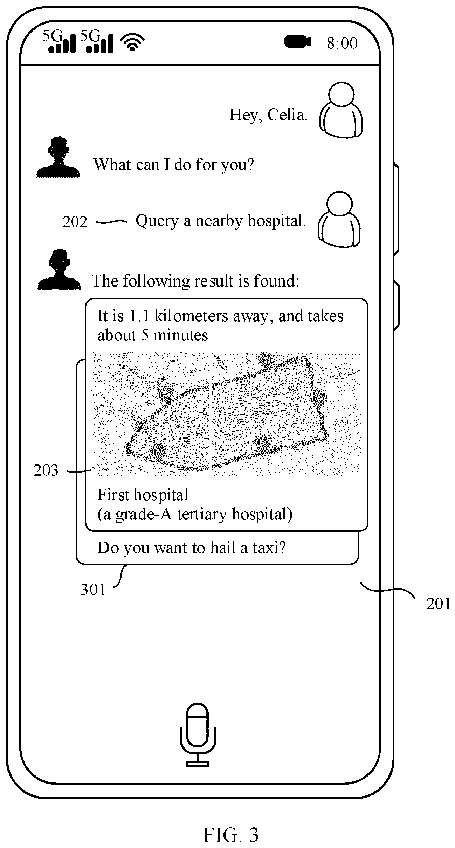

In this case, in this embodiment of this application, an example in which the mobile phone displays the map card 203 in the dialog interface 201 is still used. After receiving the voice instruction 202, the mobile phone may obtain not only the map card 203 corresponding to the voice instruction 202, but also another service card associated with the map card 203. For example, the mobile phone may determine a taxi hailing card 301 in the online car-hailing app as the service card associated with the map card 203. Further, as shown in FIG. 3, when displaying the map card 203 in the dialog interface 201, the mobile phone may further display the associated taxi hailing card 301. For example, the mobile phone may combine the taxi hailing card 301 and the map card 203 into a card group, and display the card group in the dialog interface 201. The map card 203 may be overlaid on the taxi hailing card 301. In this way, the user can switch between two associated services by switching the taxi hailing card 301 and the map card 203 in the card group.

In some embodiments, if the map card 203 includes information about a hospital A, the mobile phone may further display, in the dialog interface 201, a registration card of the hospital A provided in a related app as the service card associated with the map card 203. This is not limited in this embodiment of this application.

To be specific, when displaying a chat interface (for example, the dialog interface 201) with a first contact in a chat application (for example, the voice assistant app), the electronic device such as the mobile phone may receive and display a first message (for example, the voice instruction 202) input by the user in the chat interface. In this case, the electronic device may obtain, based on a conventional technology, a first service card (for example, the map card 203) corresponding to the first message, and may further obtain a second service card (for example, the taxi hailing card 301) associated with the first service card. Further, when displaying the first service card in the chat interface, the electronic device may display the second service card associated with the first service card.

In this way, when the electronic device such as the mobile phone displays a service (for example, a service card), the electronic device may simultaneously recommend, to the user, another service associated with the service, and the user may implement a switching and jumping process between a plurality of services without performing jumping between a plurality of applications. This improves user experience.

A specific method for obtaining a service card associated with a service card by the mobile phone is described in detail in a subsequent embodiment. Therefore, details are not described herein.

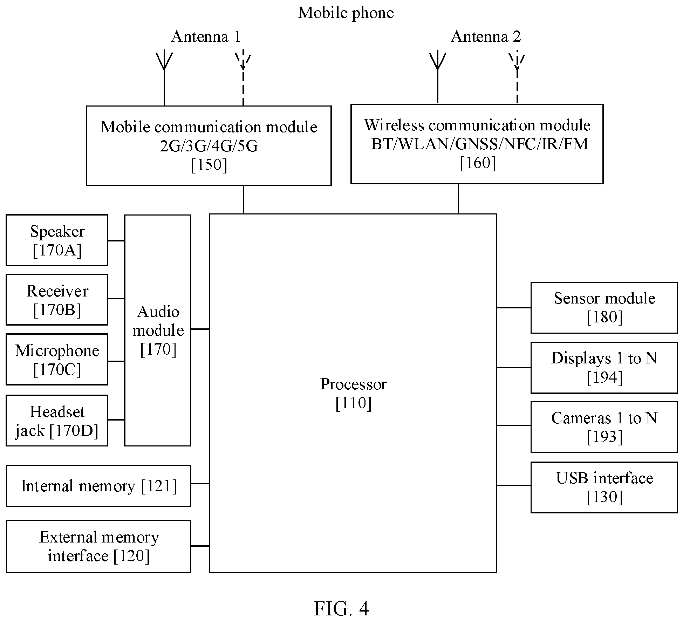

An example in which a mobile phone is used as the electronic device is still used. FIG. 4 is a schematic diagram of a structure of the mobile phone.

The mobile phone may include a processor 110, an external memory interface 120, an internal memory 121, a universal serial bus (universal serial bus, USB) interface 130, an antenna 1, an antenna 2, a mobile communication module 150, a wireless communication module 160, an audio module 170, a speaker 170A, a receiver 170B, a microphone 170C, a headset jack 170D, a sensor module 180, and the like.

It can be understood that the structure shown in this embodiment of the present invention does not constitute a specific limitation on the mobile phone. In some other embodiments of this application, the mobile phone may include more or fewer components than those shown in the figure, or may combine some components, or may split some components, or may have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor may directly invoke the instruction or the data from the memory. This avoids repeated access, reduces waiting time of the processor 110, and improves system efficiency.

A wireless communication function of the mobile phone may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the mobile phone may be configured to cover one or more communication frequency bands. Different antennas may be reused, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution including 2G/3G/4G/5G, or the like applied to the mobile phone. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the mobile phone and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the mobile phone, the antenna 1 and the mobile communication module 150 are coupled, and the antenna 2 and the wireless communication module 160 are coupled, so that the mobile phone can communicate with a network and another device by using a wireless communication technology. The wireless communication technology may include a global system for mobile communication (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The mobile phone implements a display function by using the GPU, a display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone may include one or N displays 194. N is a positive integer greater than 1.

The mobile phone may implement a photographing function by using the ISP, a camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD), or a complementary metal-oxide-semiconductor (complementary metal-oxide-semiconductor, CMOS) phototransistor. The photosensitive element converts the optical signal into the electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone may include one or N cameras 193. N is a positive integer greater than 1.

The digital signal processor is configured to process a digital signal, and may process another digital signal in addition to the digital image signal. For example, when the mobile phone selects a frequency, the digital signal processor is configured to perform Fourier transform or the like on frequency energy.

The video codec is configured to compress or decompress a digital video. The mobile phone may support one or more video codecs. In this way, the mobile phone can play or record videos in a plurality of encoding formats, for example, moving picture experts group (moving picture experts group, MPEG)-1, MPEG-2, MPEG-3, and MPEG-4.

The external memory interface 120 may be configured to be connected to an external memory card, for example, a micro SD card, to extend a storage capability of the mobile phone. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs instructions stored in the internal memory 121, to perform various function applications of the mobile phone and data processing. The internal memory 121 may include a program storage area and a data storage area. The program storage area may store an operating system, an application required for at least one function (for example, a sound playing function or an image playing function), and the like. The data storage area may store data (for example, audio data or a phone book) created during use of the mobile phone, and the like. In addition, the internal memory 121 may include a highspeed random access memory, and may further include a nonvolatile memory, for example, at least one magnetic disk storage device, a flash storage device, or a universal flash storage (universal flash storage, UFS).

The mobile phone may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The mobile phone may listen to music or answer a hands-free call by using the speaker 170A.

The receiver 170B, also referred to as an "earpiece", is configured to convert an electrical audio signal into a sound signal. When the mobile phone answers a call or receives voice information, the receiver 170B may be put close to a human ear to listen to a voice.

The microphone 170C, also referred to as a "mike" or a "mic", is configured to convert a sound signal into an electrical signal. When making a call or sending voice information, a user may make a sound through a mouth by approaching the microphone 170C, to input a sound signal to the microphone 170C. At least one microphone 170C may be disposed in the mobile phone. In some other embodiments, two microphones 170C may be disposed in the mobile phone, to collect a sound signal and further implement a noise reduction function. In some other embodiments, three, four, or more microphones 170C may alternatively be disposed in the mobile phone, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface, or a cellular telecommunications industry association of the USA (cellular telecommunications industry association of the USA, CTIA) standard interface.

The sensor module 180 may include a pressure sensor, a gyro sensor, a barometric pressure sensor, a magnetic sensor, an acceleration sensor, a range sensor, an optical proximity sensor, a fingerprint sensor, a temperature sensor, a touch sensor, an ambient light sensor, a bone conduction sensor, and the like.

Certainly, the mobile phone may further include a charging management module, a power management module, a battery, a button, an indicator, one or more SIM card interfaces, and the like. This is not limited in this embodiment of this application.

A software system of the mobile phone may use a layered architecture, an event-driven architecture, a microkernel architecture, a microservice architecture, or a cloud architecture. In this embodiment of this application, an Android system with a layered architecture is used as an example to describe a software structure of the mobile phone.

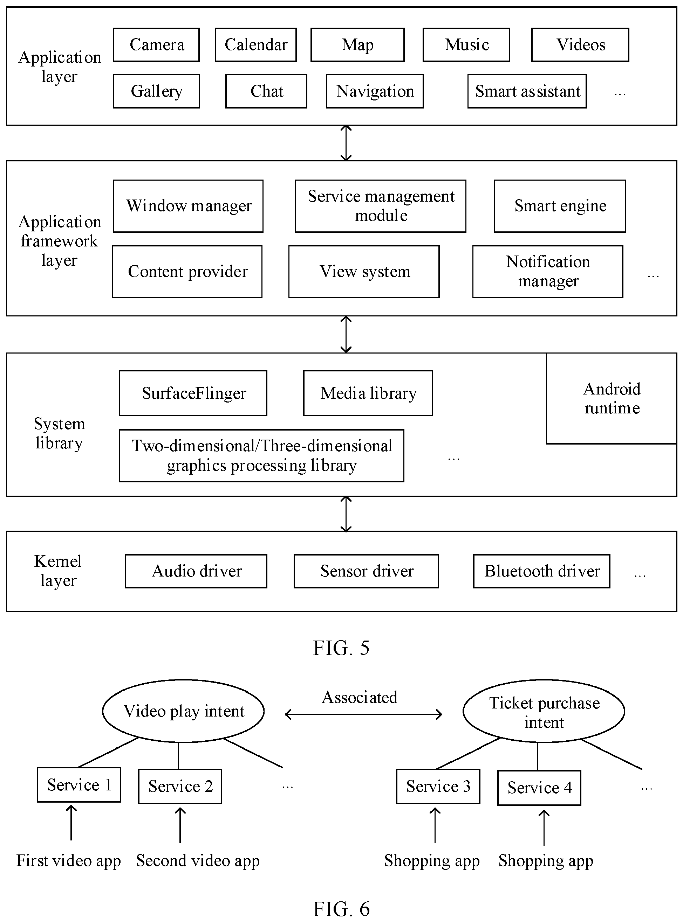

For example, FIG. 5 is a block diagram of a software structure of a mobile phone according to an embodiment of this application.

In a layered architecture, software is divided into several layers, and each layer has a clear role and task. The layers communicate with each other through a software interface. In some embodiments, an Android system is divided into four layers from top to bottom: an application layer, an application framework layer, Android runtime (Android runtime), a system library, and a kernel layer.

The application layer may include a series of application packages.

As shown in FIG. 5, apps (applications, applications) such as Phone, Memo, Browser, Contacts, Camera, Gallery, Calendar, Map, Bluetooth, Music, Videos, and Messages may be installed at the application layer.

The application framework layer provides an application programming interface (application programming interface, API) and a programming framework for the application at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by the application. The data may include a video, an image, audio, calls that are made and answered, a browsing history, a bookmark, a phone book, and the like.

The view system may be configured to construct a display interface of the application. Each display interface may include one or more controls. Generally, the controls may include interface elements such as an icon, a button, a menu, a tab, a text box, a dialog box, a status bar, a navigation bar, and a widget (Widget).

The phone manager is configured to provide a communication function of the mobile phone 201, for example, management of a call status (including answering, hanging up, or the like).

The resource manager provides various resources for the application, such as a localized character string, an icon, a picture, a layout file, and a video file.

The notification manager enables the application to display notification information in the status bar, and may be configured to convey a notification message. The notification manager may automatically disappear after a short pause without interaction with a user. For example, the notification manager is configured to notify download completion, provide a message notification, and the like. The notification manager may alternatively be a notification that appears in a top status bar of the system in a form of a graph or a scroll bar text, for example, a notification of an application running in the background, or may be a notification that appears on a screen in a form of a dialog window. For example, text information is prompted in the status bar, a prompt tone is played, vibration is generated, or an indicator blinks.

As shown in FIG. 5, the system library may include a plurality of functional modules, for example, SurfaceFlinger (SurfaceFlinger), a media library (Media Library), a three-dimensional graphics processing library (for example, OpenGL ES), and a 2D graphics engine (for example, SGL). The SurfaceFlinger is configured to manage a display subsystem and provide fusion of 2D and 3D layers for a plurality of applications. The media library supports playback and recording in a plurality of common audio and video formats, a static image file, and the like. The media library may support a plurality of audio and video encoding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The Android runtime includes a kernel library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

As shown in FIG. 5, the kernel layer is a layer between hardware and software. The kernel layer includes at least a camera driver, an audio driver, a sensor driver, and the like. This is not limited in this embodiment of this application.

In this embodiment of this application, still as shown in FIG. 5, a smart assistant app (which may also be referred to as a voice assistant app or the like) may be installed at the application layer of the mobile phone. The smart assistant app may invoke a smart engine at the application framework layer to recommend, to the user, a second service associated with a current to-be-displayed first service.

For example, as shown in FIG. 6, each service provided by each application may be bound to a related intent (intent) in advance. For example, a service (namely, a service 1) that is provided by a first video app and that plays a video A may be bound to a video play intent (VideoPlay). A service (namely, a service 2) that is provided by a second video app and that plays a video B may also be bound to the video play intent (VideoPlay). For another example, a movie ticket purchase service (namely, a service 3) provided by a shopping app may be bound to a ticket purchase intent (Ticket). A concert ticket purchase service (namely, a service 4) provided by the shopping app may also be bound to the ticket purchase intent (Ticket). In some embodiments, as shown in FIG. 5, a service management module may be provided at the application framework layer in the mobile phone. The service management module may be configured to manage and maintain binding relationships between the foregoing services and different intents.

In this embodiment of this application, the smart engine may learn an association relationship between different intents by using a preset AI algorithm. For example, when a movie 1 is a currently popular movie, an intent associated with a video play intent bound to a service of playing the movie 1 may be a ticket purchase intent. For another example, when the user projects the movie 1 on a television for playing, an intent associated with the video play intent bound to the service of playing the movie 1 may be a television control intent. To be specific, services under two mutually associated intents are usually functions that the user needs to use in a scenario.

The application may usually display a specific service based on a query instruction input by the user. For example, still as shown in FIG. 5, after receiving a query instruction 1 that is input by the user and that is used to query the video A, a chat app may identify that an intent of the query instruction 1 is the video play intent. Further, the chat app may send the identified video play intent to the service management module, and the service management module determines, from services bound to the video play intent, the service 1 corresponding to the query instruction 1. Further, the service management module may obtain the service 1 from the first video app, and send the service 1 to the chat app for display.

In this embodiment of this application, still as shown in FIG. 5, after receiving the video play intent identified by the chat app, the service management module may further notify the smart assistant app to invoke the smart engine to determine an intent (for example, the ticket purchase intent) currently associated with the video play intent. Further, the service management module may determine, from services bound to the ticket purchase intent, the service 3 associated with the service 1. Similarly, the service management module may obtain the service 3 from the shopping app, and send the service 3 to the chat app.

In this way, the chat app may not only obtain the service 1 corresponding to the current query instruction 1, but also obtain the service 3 associated with the service 1. Further, when displaying the service 1, the chat app may further recommend, to the user, the service 3 associated with the service 1, so that the user can conveniently and quickly use a function provided by the service 1 or the service 3. This reduces application and interface switching when the mobile phone jumps between two services, and improves user experience.

It should be noted that the service management module may be provided at the application framework layer as an independent functional module, or may be integrated into an existing functional module such as the resource manager or the content provider at the application framework layer. Alternatively, the service management module may be integrated into an application (for example, the chat app) at an application layer. Alternatively, the service management module may be provided in a server, and an application (for example, the chat app) in the mobile phone may interact with the service management module in the server by invoking a corresponding URL (Uniform Resource Locator, uniform resource locator) interface. This is not limited in this embodiment of this application.

The following still uses a mobile phone as an example to describe in detail a service recommendation method provided in an embodiment of this application with reference to the accompanying drawings.

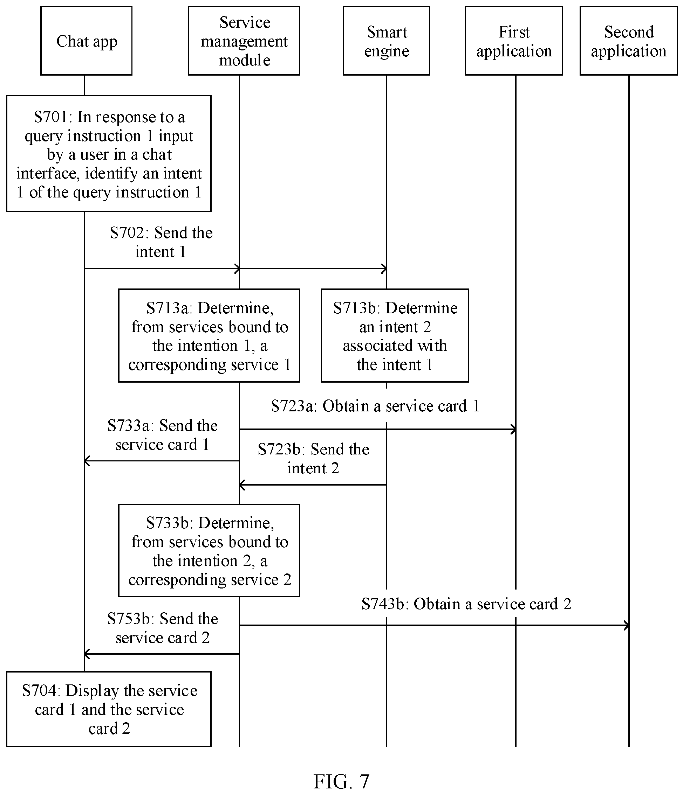

For example, when using a chat app, a user may implement, based on the method shown in FIG. 7, the service recommendation method provided in this embodiment of this application. Specifically, the recommendation method may include steps S701 to S704.

S701: In response to a query instruction 1 input by the user in a chat interface, the chat app identifies an intent 1 of the query instruction 1.

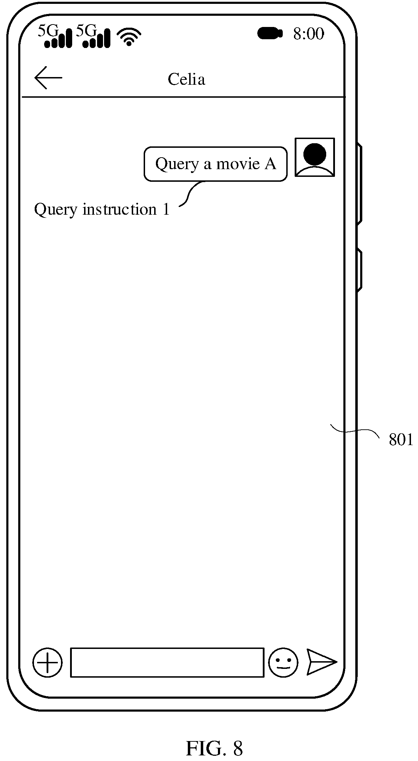

For example, the user may use the chat app to converse with a contact in the chat app. For example, when the mobile phone runs the chat app, if it is detected that the user selects a robot "Celia" in the chat app, as shown in FIG. 8, the mobile phone may display a chat interface 801 with "Celia" in the chat app. Further, the user may input a chat message (which may also be referred to as a message) to "Celia" in the chat interface 801. In some embodiments, a message that is sent by the user to a contact (for example, "Celia") in the chat interface 801 may include a query instruction. For example, the user may input the query instruction 1 "query a movie A" in an input box of the chat interface 801, and tap a send button, to trigger the chat app of the mobile phone to send the query instruction 1 to "Celia".

After receiving the query instruction 1 "query a movie A" that is input by the user, the chat app may provide a corresponding service card for the user in response to the query instruction 1, so that the user can conveniently use service content corresponding to the query instruction 1 in the chat interface 801. Certainly, the user may further use the chat app to send a corresponding query instruction to a contact such as an added friend, a group, or an official account. For example, the user may send, by using the chat app, a query instruction "what movie is recently watched" to a contact "Zhang San", and then the contact "Zhang San" may send, in the chat app, a service card of the movie A to the user. In this case, the chat app may display the service card of the movie A in a chat interface between the user and the contact "Zhang San".

For example, the chat app may extract an intent (intent) of the query instruction 1 by using a preset natural language understanding (natural language understanding, NLU) algorithm. Alternatively, the chat app may send the query instruction 1 to a voice assistant app, and the voice assistant app extracts an intent of the query instruction 1 by using a preset NLU algorithm. Alternatively, the chat app may trigger the mobile phone to interact with a server, to request the server to extract an intent of the query instruction 1.

To be specific, step S701 is performed, so that when displaying a chat interface with a first contact in the chat app, the mobile phone may receive and display a message that includes the query instruction 1 and that is input by the user in the chat interface. Further, the chat app in the mobile phone may extract a specific intent of the query instruction 1.

S702: The chat app sends the intent 1 to a service management module, and the service management module sends the intent 1 to a smart engine.

For example, the intent 1 that is extracted by the chat app and that corresponds to the query instruction 1 is a video play intent (VideoPlay). Further, the chat app may send a request message to the service management module at an application framework layer, to request the service management module to obtain, based on the intent 1, a service corresponding to the current query instruction 1. The request message may include the intent 1 extracted by the chat app, so that the service management module subsequently obtains, based on the intent 1, the service corresponding to the query instruction 1.

In some embodiments, when obtaining the service corresponding to the query instruction 1, the service management module may further need some key information (for example, a movie title) in the query instruction 1 in addition to the intent 1. In this case, the request message may further include key information in the query instruction 1, for example, the movie A. Alternatively, the request message may further include the query instruction 1, so that the service management module can extract corresponding key information from the query instruction 1.

After obtaining the intent 1 of the current query instruction 1, the service management module may obtain, based on the intent 1, the service corresponding to the query instruction 1, and may obtain an intent associated with the intent 1, to recommend, based on the associated intent, a service related to the query instruction 1 to the user. The service management module may obtain the service corresponding to the query instruction 1 by performing the following steps S713a to S731a. In addition, the service management module may send, to the smart engine, the intent 1 obtained from the chat app, to recommend the service related to the query instruction 1 to the user by performing the following steps S713b to S753b. That is, step S703 may include steps S713a to S731a and steps S713b to S753b.

For example, the service management module may first send the intent 1 to a smart assistant app, and then the smart assistant app sends the intent 1 to the smart engine. Alternatively, the service management module may directly send the intent 1 to the smart engine. This is not limited in this embodiment of this application.

In some other embodiments, after obtaining the query instruction 1 input by the user, the chat app may directly send the query instruction 1 to the service management module. In this case, the service management module may identify the intent 1 of the query instruction 1, and send the identified intent 1 to the smart engine. Certainly, the chat app may directly send the query instruction 1 to the smart engine, and the smart engine identifies the intent 1 of the query instruction 1, and sends the identified intent 1 to the service management module. This is not limited in this embodiment of this application.

S713a: The service management module determines, from services bound to the intent 1, a service 1 corresponding to the query instruction 1.

An example in which the intent 1 is the video play intent is still used. As shown in FIG. 6, the service management module stores binding relationships between different intents and services. After obtaining the intent 1 of the query instruction 1, the service management module may determine, from the services bound to the intent 1, the service corresponding to the query instruction 1.

For example, when the query instruction 1 includes the key information "movie A", the service management module may search for, from services bound to the video play intent, a video play service that can play the movie A. For example, when a first video app provides the video play service (namely, the service 1) of the movie A, the service management module may determine the service 1 as the service corresponding to the query instruction 1.

Alternatively, if a plurality of applications provide video play services of the movie A, the service management module may select one of the provided plurality of video play services of the movie A as the service 1 corresponding to the query instruction 1. For example, the service management module may determine a video play service that is of the movie A and that is provided by a video app last used by the user as the service 1. For another example, the service management module may determine a video play service that is of the movie A and that is provided by a video app most frequently used by the user as the service 1.

S723a: The service management module obtains, from a first application, a service card 1 corresponding to the service 1.

An example in which the intent 1 is the video play intent is still used. After determining that the service 1 corresponding to the query instruction 1 is the video play service that is of the movie A and that is provided by the first video app, the service management module may request the first video app to provide the service 1.

For example, the service management module may include an identifier of the service 1 in the request message and send the request message to the first video app. Further, the first video app may send the service 1 in a form of a card (namely, the service card 1) to the service management module in response to the request message. For example, the first video app may interact with a server 1 of the first video app, and obtain, from the server 1, the service card 1 that includes the video play service of the movie A. Further, the first video app may send the service card 1 to the service management module.

To be specific, when the query instruction 1 has the intent 1, the mobile phone may determine, from N (N is an integer greater than 0) services bound to the intent 1, the service 1 corresponding to the query instruction 1 by performing steps S702 to S723a. Further, the mobile phone may obtain, from the corresponding first application, the service card 1 corresponding to the service 1. The first application is an application (for example, the first video app) that provides the service card 1. Certainly, when the application that provides the service card 1 is the chat app, the mobile phone may obtain the corresponding service card 1 from the chat app. This is not limited in this embodiment of this application.

It may be understood that, in addition to presenting a service in a form of a service card, the first video app may further send specific content of the service 1 to the service management module in a manner of a window (for example, a floating window) or the like. This is not limited in this embodiment of this application.

S733a: The service management module sends the service card 1 to the chat app.

After obtaining the service card 1, the service management module may send the service card 1 to the chat app, so that the chat app displays, in the chat interface 801, the service card 1 as a chat message.

So far, S713a to S733a are performed, so that the service management module can obtain, based on the intent 1 that is of the query instruction 1 and that is identified by the chat app, the service card 1 corresponding to the query instruction 1. The service card 1 may be subsequently displayed in the chat interface 801 as a chat message for replying to the query instruction 1.

In addition, after sending the intent 1 of the query instruction 1 to the smart engine in step S702, the service management module may further trigger the smart engine to perform the following steps S713b to S753b.

S713b: The smart engine determines an intent 2 associated with the intent 1.

An example in which the intent 1 is the video play intent is still used. After obtaining that the intent 1 of the current query instruction 1 is the video play intent, the smart engine may determine the current intent 2 associated with the video play intent. The intent 2 is usually an intent that may exist when the user has the intent 1, or an intent that may exist subsequently after the user has the intent 1.

In some embodiments, the smart engine may record an association relationship between different intents. For example, that the video play intent is associated with a projection intent, and a location query intent is associated with a taxi hailing intent may be preset. In this case, after obtaining the intent 1 of the current query instruction 1, the smart engine may determine, based on the association relationship, the intent 2 associated with the intent 1.

In some other embodiments, the smart engine may obtain data such as usage data (for example, a video play record, a shopping record, and an application usage record) of the user, current environment data (for example, time, a location of a mobile phone, and a recently popular TV series), and a context of the query instruction 1 in the chat app. Further, the smart engine may determine, with reference to the obtained data, the intent 2 associated with the intent 1. For example, the smart engine may determine, by using a preset AI algorithm with reference to the obtained data, the intent 2 associated with the intent 1.

For example, when the query instruction 1 includes the key information "movie A", the smart engine may query whether the movie A is released. If the movie A is released, the smart engine may determine that the intent 2 associated with the intent 1 is the projection intent. Correspondingly, if the movie A is not released, the smart engine may determine that the intent 2 associated with the intent 1 is a ticket purchase intent. Certainly, there may be a plurality of intents 2 that are associated with the intent 1 and that are determined by the smart engine. This is not limited in this embodiment of this application.

S723b: The smart engine sends the intent 2 to the service management module.

An example in which the intent 2 associated with the intent 1 is the ticket purchase intent is used. After determining the intent 2 associated with the intent 1, the smart engine may send the intent 2 to the service management module. For example, the smart engine may send an identifier of the ticket purchase intent to the service management module. Alternatively, the smart engine may first send an identifier of the ticket purchase intent to the smart assistant app, and then the smart assistant app sends the identifier of the ticket purchase intent to the service management module.

To be specific, steps S713b to S723b are performed, so that the mobile phone may determine the intent 2 associated with the intent 1. Similar to the intent 1, the intent 2 may have a binding relationship with M (M is an integer greater than 0) services.

S733b: The service management module determines, from services bound to the intent 2, a service 2 corresponding to the query instruction 1.

The example in which the intent 2 associated with the intent 1 is the ticket purchase intent is still used. After receiving the intent 2 sent by the smart engine, similar to step S713a, the service management module may determine, from the services bound to the intent 2, the service 2 corresponding to the query instruction 1.

For example, the intent 2 is bound to a ticket purchase service that is of the movie A and that is provided by a group purchase app and a ticket purchase service that is of a concert B and that is provided by a shopping app. In this case, because the query instruction 1 includes the key information "movie A", the service management module may determine the ticket purchase service of the movie A as the service 2 corresponding to the query instruction 1.

Because the intent 1 of the query instruction 1 is associated with the intent 2, the service 1 determined by the service management module based on the intent 1 is also associated with the service 2 determined based on the intent 2. For example, the service 2 is usually a service that may be used by the user when the user uses the service 1 (or after the user uses the service 1). Subsequently, when displaying the service 1 in response to the query instruction 1, the chat app may recommend the associated service 2 to the user, so that the user can conveniently perform switching and jumping between the plurality of services.

S743b: The service management module obtains, from a second application, a service card 2 corresponding to the service 2.

For example, after determining that the service 2 is the ticket purchase service that is of the movie A and that is provided by the group purchase app, the service management module may request the group purchase app (namely, the second application) to provide the service 2. For example, the service management module may include an identifier of the service 2 in the request message and send the request message to the group purchase app. Further, the group purchase app may send the service 2 in a form of a card (namely, the service card 2) to the service management module in response to the request message.

To be specific, the mobile phone may determine, from the M (N is an integer greater than 0) services bound to the intent 2, the service 2 corresponding to the query instruction 1 by performing steps S733b to S743b. Further, the mobile phone may obtain, from the corresponding second application, the service card 2 corresponding to the service 2. In this case, the service card 2 is also associated with the service card 1.

S753b: The service management module sends the service card 2 to the chat app.

After obtaining the service card 2, the service management module may send the service card 2 to the chat app, so that the chat app recommends, to the user, the service card 2 as a service associated with the service card 1.

So far, S713b to S753b are performed, so that the service management module can interact with the smart engine to obtain the intent 2 associated with the intent 1, and obtain, based on the intent 2, the service card 2 that is currently recommended to the user and that is related to the query instruction 1.

S704: The chat app displays the service card 1 and the service card 2.

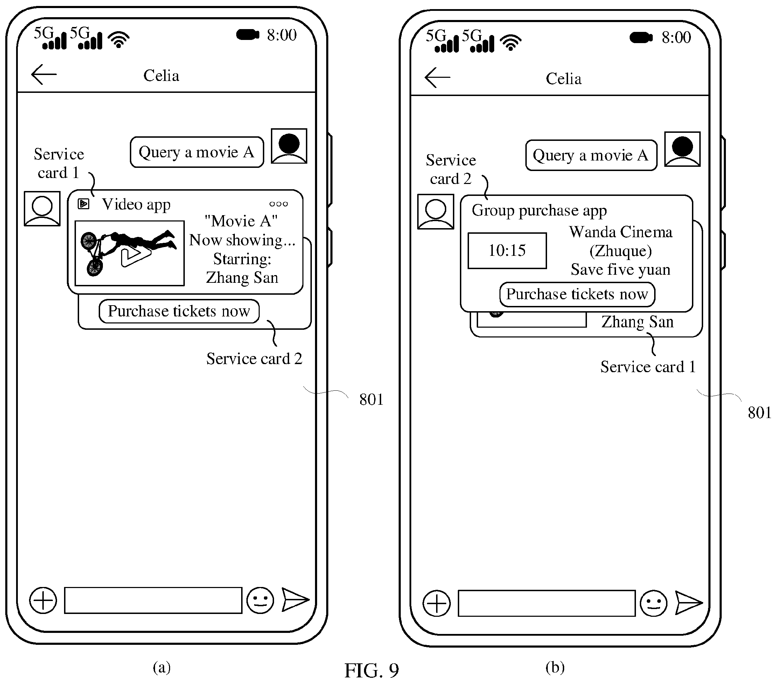

For example, as shown in (a) in FIG. 9, after obtaining the service card 1, the chat app may display, in the chat interface 801 with "Celia", the service card 1 as the chat message for replying to the query instruction 1. In addition, the chat app may display, in the chat interface 801, the service card 2 as a currently recommended card. For example, still as shown in (a) in FIG. 9, the chat app may display, in the chat interface 801, the service card 1 and the service card 2 as a card group. The service card 1 may be located on the service card 2. Certainly, the card group may further include another service card currently recommended to the user. This is not limited in this embodiment of this application. In this way, when normally displaying a service (for example, the service card 1), the chat app in the mobile phone may recommend, to the user, the service card 2 associated with the service, so that the user can conveniently perform switching and jumping between a plurality of services that may have use requirements. This improves user experience.

For example, when the user wants to purchase a movie ticket of the movie A after seeing the service card 1, the user may input a switching operation (for example, a sliding operation) to the service card 1. In this case, as shown in (b) in FIG. 9, in response to the switching operation of the user, the chat app may switch the service card 2 in the card group for display on the service card 1. The service card 2 may include ticket purchase information that is about latest one or more movies A and that is provided by the group purchase app. The user may perform operations such as query and ticket purchase by directly using the service card 2 as an entry. In this way, when querying the movie A in the chat app, the user may complete a function such as ticket purchase without opening the group purchase app to perform related searching and switching operations. This simplifies an operation procedure in which the user uses services in different applications, and enhances a relationship between the services.

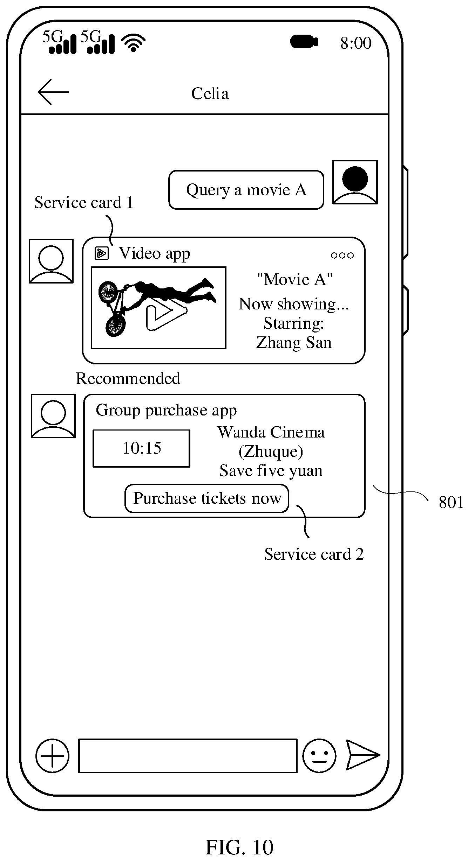

It should be noted that the chat app may display the service card 1 and the service card 2 in a form of the card group, or may display the service card 1 and the service card 2 in another form. For example, as shown in FIG. 10, the chat app may display, in the chat interface 801, the service card 1 as the chat message (which may also be referred to as a reply message) for replying to the query instruction 1. In addition, the chat app may further display, in the chat interface 801, the service card 2 as a chat message.

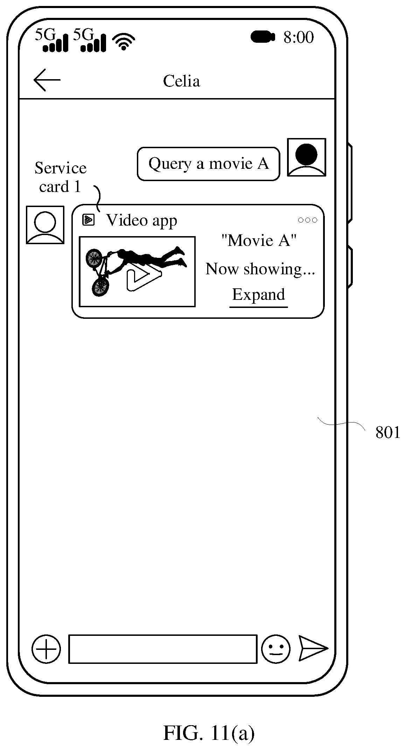

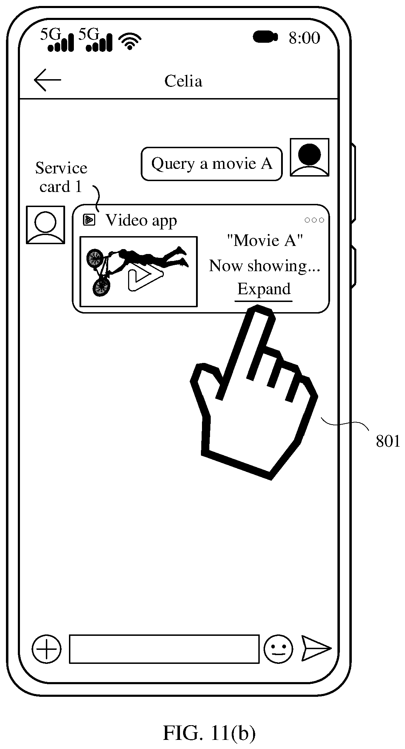

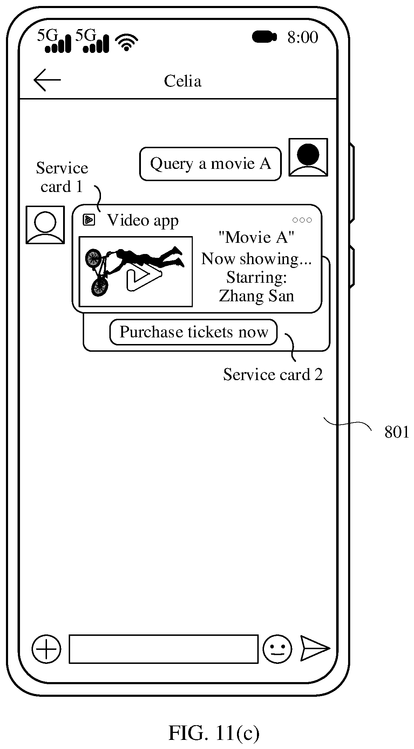

In some other embodiments, the chat app may display the service card 1 and the service card 2 together, or may first display the service card 1 and then display the service card 2. For example, as shown in FIG. 11(a), after obtaining the service card 1, the chat app may display, in the chat interface 801 with "Celia", the service card 1 as the chat message for replying to the query instruction 1. Further, when it is detected that the user inputs any operation to the service card 1, for example, as shown in FIG. 11(b), when it is detected that the user taps an expand button in the service card 1, as shown in FIG. 11(c), the chat app may further display, in the chat interface 801, the service card 2 as the currently recommended card. To be specific, when it is detected that the user inputs an operation to the service card 1, it indicates that the user has an intent to use a related service in the service card 1. In this case, the chat app may recommend, to the user, the service card 2 associated with the service card 1, so that the user can conveniently use a service in the service card 2 when using the service card 1 (or after using the service card 1).

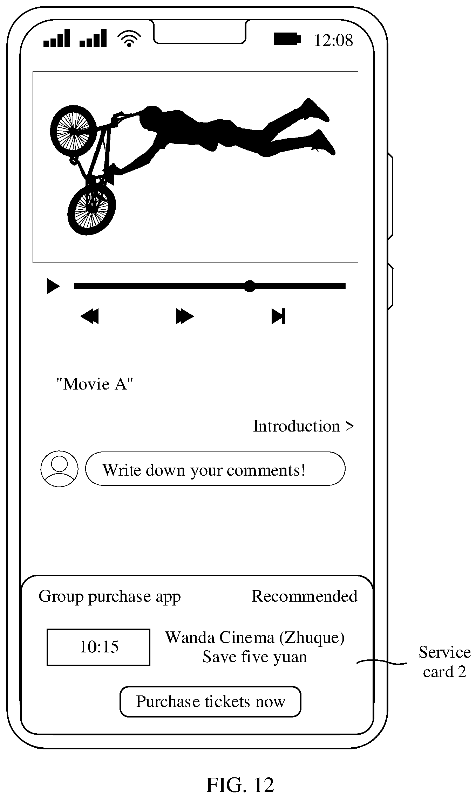

Alternatively, after the chat app first displays the service card 1 in the chat interface 801, if it is detected that the user inputs an operation to the service card 1, the mobile phone may jump from the chat app to the first video app that provides the service card 1. In this case, as shown in FIG. 12, after jumping to the first video app by using the service card 1 as an entry, the mobile phone may further display the service card 2 associated with the service card 1. For example, the mobile phone may display the service card 2 in a form of a notification message. In this way, even if the user performs jumping to a corresponding application when using the service card 1, the mobile phone may recommend, to the user, the service card 2 associated with the service card 1, so that the user can conveniently use the service in the service card 2.

It should be noted that, after displaying the service card 1, the chat app may obtain, based on steps S713b to S753b, the service card 2 associated with the service card 1, and then display, in the chat interface 801, the service card 2 as the recommended card. For example, after performing step S702, the mobile phone may perform steps S713a to S733a, so that the chat app obtains the service card 1 corresponding to the query instruction 1. Further, as shown in FIG. 11(a), the chat app may display the service card 1 in the chat interface 801. In this case, if it is detected that the user inputs any operation to the service card 1, the mobile phone may be triggered to perform steps S713b to S753b, so that the chat app obtains the service card 2 associated with the service card 1. Further, as shown in FIG. 11(c), the chat app may display, in the chat interface 801, the service card 2 below the service card 1. That is, an execution sequence of steps S713a to S733a and steps S713b to S753b is not limited in this embodiment of this application.

In the foregoing embodiment, an example in which the service management module obtains, by interacting with the smart engine, the service 2 associated with the to-be-displayed service 1 is used for description. In some other embodiments, the application that provides the service 1 may further be configured to determine the service 2 associated with the service 1. In this way, the service management module may further obtain the associated service 2 by interacting with the application that provides the service 1.

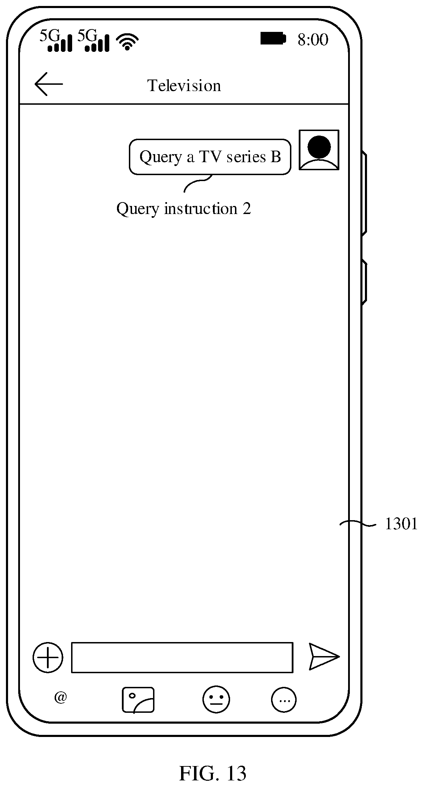

An example in which the user inputs the query instruction in the chat app is still used. As shown in FIG. 13, when the mobile phone runs the chat app, if it is detected that the user selects a device (for example, a television) in the chat app as a chat object, the mobile phone may display a chat interface 1301 with the "television" in the chat app. Further, the user may input a query instruction 2 "view a TV series B" to an input box of the chat interface 1301, and tap a send button, to trigger the chat app of the mobile phone to send the query instruction 2 to the "television". In some embodiments, the user may further associate a related device in the query instruction 2, to indicate that content in the query instruction 2 is executed by the device. For example, the user may include a character "@TV" in the query instruction 2 to associate the television.

Similar to the foregoing embodiment, after receiving the query instruction 2, the chat app may identify that an intent of the query instruction 2 is a video play intent (VideoPlay). Further, the chat app may send the intent of the query instruction 2 to the service management module, and the service management module obtains a service card corresponding to the query instruction 2 and an associated recommended card.

Different from the foregoing embodiment, after obtaining the video play intent of the query instruction 2, the service management module may determine, from services bound to the video play intent, a service 3 corresponding to the query instruction 2 (namely, perform step S713a), and does not need to send the video play intent of the query instruction 2 to the smart engine.

For example, when the query instruction 2 includes key information "TV series B", the service management module may search for, from the services bound to the video play intent, a video play service that can play the TV series B. For example, when a second video app provides the video play service (namely, the service 3) of the TV series B, the service management module may determine the service 3 as the service corresponding to the query instruction 2.

Further, the service management module may include an identifier of the service 3 in the request message and send the request message to the second video app, to request the second video app to send a service card (for example, a service card 3) of the service 3 to the service management module. In this embodiment of this application, the service management module may further include the video play intent of the query instruction 2 in the request message and send the request message to the second video app. In this way, the second video app may not only obtain a corresponding service card based on the identifier of the service 3, but also determine an intent associated with the video play intent of the query instruction 2. A method for determining the intent associated with the video play intent by the second video app is similar to the method for determining the intent 2 associated with the intent 1 by the smart engine in step S713b. Therefore, details are not described herein again. That is, in addition to the smart engine, an application in the mobile phone may also determine an association relationship between some intents.

For example, after the second video app obtains the video play intent of the query instruction 2, because a current chat object of the user is the television, and it indicates that the user wants to play a related video on the television, the second video app may determine a television remote control intent (TvControl) as the intent associated with the current video play intent. Further, the second video app may send an identifier of the television remote control intent to the service management module.

In this way, the service management module may not only obtain the service card 3 corresponding to the query instruction 2 in the video play intent, but also obtain the television remote control intent associated with the video play intent. Further, the service management module may determine, from services bound with the television remote control intent, a service 4 corresponding to the query instruction 2. For example, the service 4 may be a television remote control service provided by a smart home app. Further, the service management module may obtain, from the smart home app, a television remote control card (namely, the service card 4) corresponding to the television remote control service. Similarly, the service management module may send the obtained service card 3 and service card 4 to the chat app. It should be noted that the service management module may sequentially send the service card 3 and the service card 4 to the chat app, or may send the service card 3 and the service card 4 together to the chat app. This is not limited in this embodiment of this application.

Subsequently, similar to step S704, the chat app may display, in the chat interface 1301, the service card 3 as a chat message for replying to the query instruction 2. In addition, the chat app may further display, in the chat interface 1301, the service card 4 as the currently recommended card.

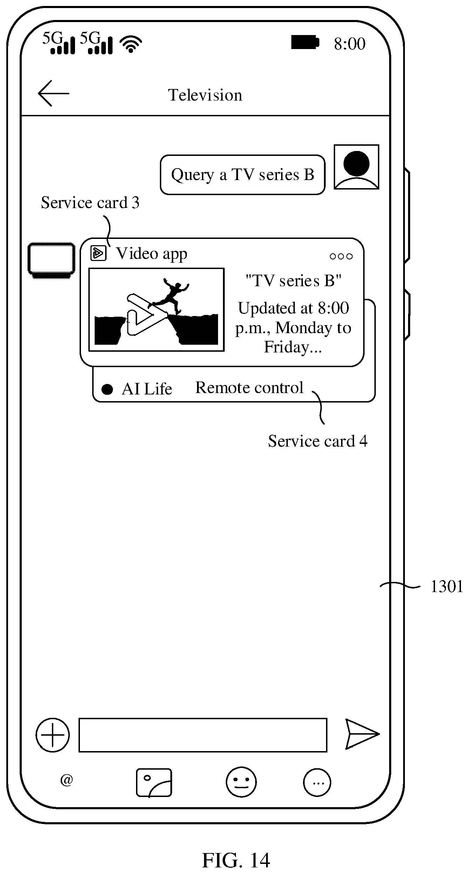

For example, as shown in FIG. 14, the chat app may display, in the chat interface 1301, the service card 3 and the service card 4 as a card group. The service card 3 may be located on the service card 4. In this case, the user may input a switching operation, to trigger the chat app to switch the service card 4 for display on the service card 3. In this way, when normally displaying the service card 3, the chat app in the mobile phone may recommend, to the user, the service card 4 associated with the service card 3, so that the user can conveniently perform switching and jumping between a plurality of services that may have use requirements. This improves user experience.

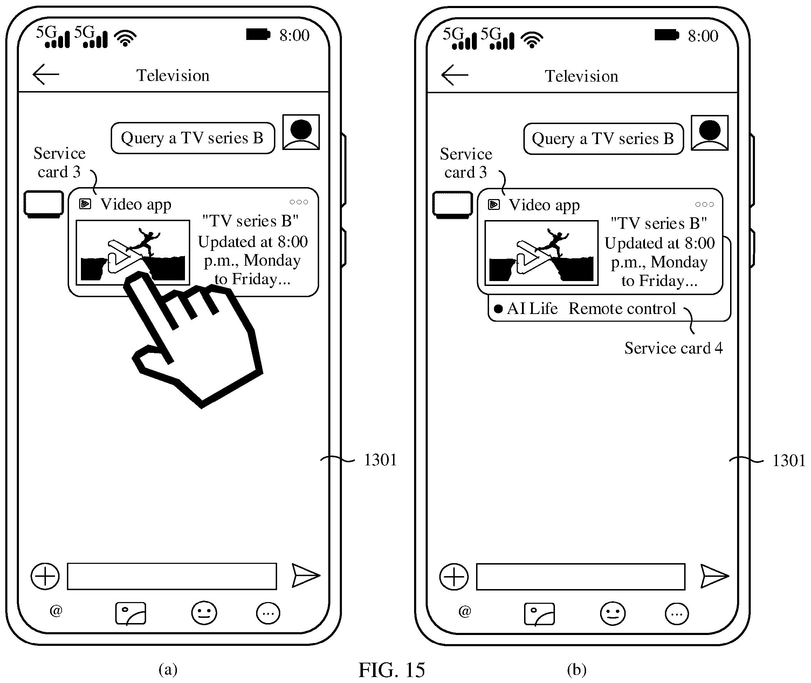

Alternatively, as shown in (a) in FIG. 15, after obtaining the service card 3, the chat app may first display, in the chat interface 1301, the service card 3 as the chat message in for replying to the query instruction 2. Further, when it is detected that the user inputs any operation to the service card 3, for example, when it is detected that the user taps a play button in the service card 3, as shown in (b) in FIG. 15, the chat app may further display, in the chat interface 1301, the service card 4 as the currently recommended card. In some embodiments, when it is detected that the user taps the play button in the service card 3, the chat app may have obtained the service card 4 based on the foregoing method. Alternatively, in some other embodiments, when it is detected that the user taps the play button in the service card 3, the chat app may trigger the service management module to determine, based on the foregoing method, the intent associated with the current video play intent, and obtain the corresponding service card 4. This is not limited in this embodiment of this application.

In some other embodiments, an example in which the user inputs the query instruction 2 in the chat interface 1301 is still used. After the chat app displays, in the chat interface 1301, the service card 3 as the chat message for replying to the query instruction 2, if it is detected that the user taps the play button in the service card 3, the mobile phone may send a video play instruction of the TV series B to the television. Further, the television may start to play the TV series B in response to the video play instruction. For example, the television may open the installed second video app to play the TV series B. Alternatively, the mobile phone may project the TV series B to the television for play in a projection manner.

In this embodiment of this application, the mobile phone may include the video play intent of the query instruction 2 in the video play instruction that is of the TV series B and that is sent to the television. In this way, after receiving the video play instruction, the television may not only start to play the TV series B in response to the video play instruction, but also determine the intent associated with the video play intent of the query instruction 2. A method for determining the intent associated with the video play intent by the television is similar to the method for determining the intent 2 associated with the intent 1 by the smart engine in step S713b. Therefore, details are not described herein again. That is, in addition to the smart engine and the application in the mobile phone, a device (for example, the television) associated with the mobile phone may also determine the association relationship between some intents.

For example, after determining that the intent associated with the current video play intent is the television remote control intent (TvControl), the television may send the identifier of the television remote control intent to the service management module of the mobile phone. Further, the service management module may determine, from the services bound to the television remote control intent, that the service 4 corresponding to the query instruction 2 is the television remote control service, and obtain, from the smart home app, the television remote control card (namely, the service card 4) corresponding to the television remote control service. Subsequently, after the service management module sends the service card 4 to the chat app, as shown in (b) in FIG. 15, the chat app may further display, in the chat interface 1301, the service card 4 as the currently recommended card, to implement a function of recommending an associated service.

In the foregoing embodiment, an example in which the user inputs the query instruction in the chat app, to trigger the chat app to display the corresponding service card is used for description. It may be understood that when the mobile phone displays a service card in another scenario, another service card associated with the service card may also be recommended to the user based on the foregoing method, so that the user can perform switching and jumping between a plurality of services that may have use requirements.

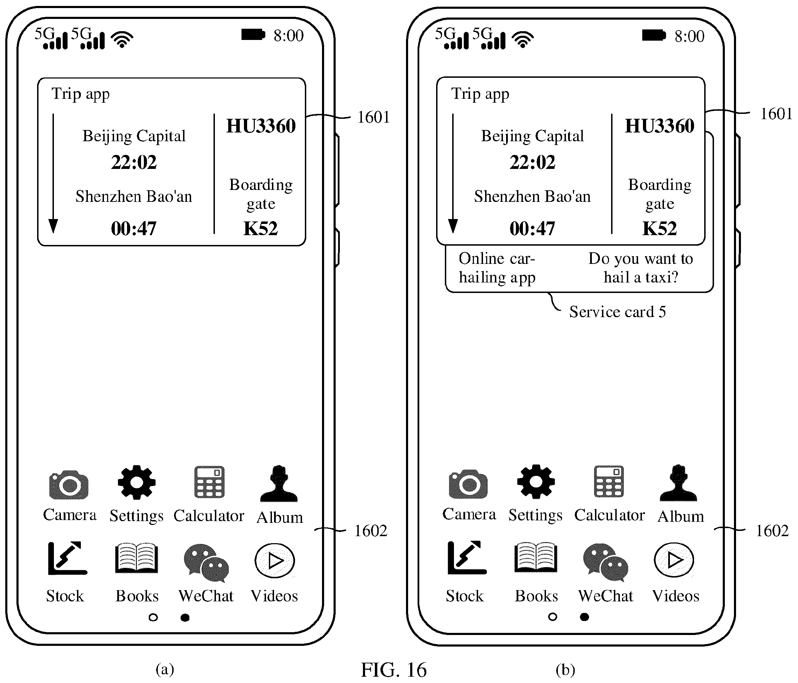

For example, the user may purchase an air ticket, a train ticket, or the like in a trip app. An example in which the user purchases the air ticket in the trip app is used. An operating system (for example, a UIsystem) of the mobile phone may obtain, from the trip app, flight information of the air ticket purchased by the user. Further, as shown in (a) in FIG. 16, the UIsystem may display, in a desktop 1602 of the mobile phone, a trip card 1601 corresponding to the flight information.

In this embodiment of this application, after obtaining the flight information of the air ticket, the UIsystem may send a trip reminder intent (TripRemind) corresponding to the flight information to the service management module. Further, the service management module may obtain, from the smart engine (or another module such as the trip app) based on the method in the foregoing embodiment, an intent associated with the current trip reminder intent. For example, the intent associated with the current trip reminder intent may be a taxi hailing intent (TaxiService). Further, the service management module may determine, from services bound to the taxi hailing intent, a service corresponding to the flight information. For example, the service corresponding to the flight information may be a taxi hailing service 5 that is from a location A to a location B and that is provided by an online car-hailing app. Further, the service management module may obtain a service card (namely, a service card 5) of the service 5 from the online car-hailing app, and send the service card 5 to the UIsystem. In this case, as shown in (b) in FIG. 16, the UIsystem may further display, in the desktop 1602, the service card 5 as the currently recommended card. In this way, when normally displaying the trip card in the desktop, the mobile phone may recommend, to the user, the service card 5 associated with the trip card, so that the user can conveniently perform switching and jumping between a plurality of services that may have use requirements. This improves user experience.

Certainly, after obtaining the trip card 1601 and the service card 5, the UIsystem may further display both the two service cards in the desktop 1602. This is not limited in this embodiment of this application.

In addition, in the foregoing embodiment, an example in which the mobile phone recommends one associated service card to the user when displaying a service card is used for description. It may be understood that the mobile phone may alternatively recommend, based on the foregoing method, a plurality of associated service cards to the user when displaying a service card. This is not limited in this embodiment of this application. In addition, another electronic device such as a tablet computer may also recommend, based on the foregoing method, one or more associated service cards to the user when displaying a service card. This is not limited in this embodiment of this application.

An embodiment of this application discloses an electronic device, including a processor, and a memory, an input device, and an output device that are connected to the processor. The input device and the output device may be integrated into one device. For example, a touch sensor (touch sensor or touch panel) may be used as the input device, a display (display) may be used as the output device, and the touch sensor and the display may be integrated into a touchscreen (touchscreen).

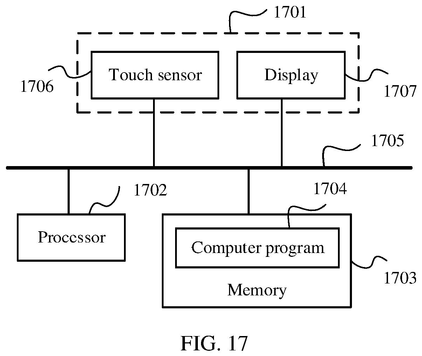

As shown in FIG. 17, the electronic device may include: a touchscreen 1701, where the touchscreen 1701 includes a touch sensor 1706 and a display 1707; one or more processors 1702; a memory 1703; one or more applications (not shown); and one or more computer programs 1704. The components may be connected through one or more communication buses 1705. Certainly, the electronic device may further include another component such as a communication module.

The one or more computer programs 1704 are stored in the memory 1703, and are configured to be executed by the one or more processors 1702. The one or more computer programs 1704 include instructions. The instructions may be used to perform the steps in the foregoing embodiment. All related content of the steps in the foregoing method embodiment may be cited in function descriptions of corresponding physical components. Details are not described herein again.

For example, the processor 1702 may be specifically the processor 110 shown in FIG. 4, the memory 1703 may be specifically the internal memory 121 shown in FIG. 4, the display 1707 may be specifically the display 194 shown in FIG. 4, and the touch sensor 1706 may be specifically the touch sensor in the sensor module 180 shown in FIG. 4. This is not limited in this embodiment of this application.

Based on the foregoing descriptions of implementations, a person skilled in the art may clearly understand that for the purpose of convenient and brief description, division of the foregoing functional modules is taken as an example for illustration. During actual application, the foregoing functions can be allocated to different functional modules for implementation based on a requirement, that is, an inner structure of an apparatus is divided into different functional modules to implement all or some of the functions described above. For a detailed working process of the foregoing system, apparatus, and unit, refer to a corresponding process in the foregoing method embodiment. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are only specific implementations of embodiments of this application, but are not intended to limit the protection scope of the invention, which is solely defined by the appended claims.

## Claims

1. A service recommendation method, comprising:
displaying, by an electronic device, a chat interface (801) with a first contact in a chat application;
receiving and displaying, by the electronic device, a first message input by a user in the chat interface (801);
obtaining (S733a), by the electronic device, a first service card corresponding to the first message, wherein the first service card represents a first service provided by a first application and displayed in a form of a card;
obtaining (S753b), by the electronic device, a second service card associated with the first service card, wherein the second service card represents a second service provided by a second application and displayed in a form of a card; and
displaying (S704), by the electronic device, the first service card and the second service card in the chat interface.

2. The method according to claim 1, wherein the obtaining, by the electronic device, a first service card corresponding to the first message comprises:
when the first message has a first intent, determining (S713a), by the electronic device from N services bound to the first intent, a first service corresponding to the first message, wherein N is an integer greater than 0; and
when the first service is provided by the first application, obtaining (S723a), by the electronic device from the first application, the first service card corresponding to the first service.

3. The method according to claim 2, wherein the obtaining, by the electronic device, a second service card that is associated with the first service card and that is provided by a second application comprises:
determining (S713b), by the electronic device, a second intent associated with the first intent, wherein the second intent has a binding relationship with M services, and M is an integer greater than 0;
determining (S733b), by the electronic device from the M services, a second service corresponding to the first message; and
when the second service is provided by the second application, obtaining (S743b), by the electronic device from the second application, the second service card corresponding to the second service.

4. The method according to claim 3, wherein the determining, by the electronic device, a second intent associated with the first intent comprises:
sending (S702), by the electronic device, the first intent to a preset smart engine, to request the smart engine to determine the second intent associated with the first intent; or
sending, by the electronic device, the first intent to the first application, to request the first application to determine the second intent associated with the first intent; or
sending, by the electronic device, the first intent to another device, to request the another device to determine the second intent associated with the first intent.

5. The method according to any one of claims 1 to 4, wherein the displaying, by the electronic device, the first service card and the second service card in the chat interface comprises:
displaying, by the electronic device, a reply message of the first message in the chat interface, wherein the first service card is located on the second service card in the reply message.

6. The method according to any one of claims 1 to 4, wherein the displaying, by the electronic device, the first service card and the second service card in the chat interface comprises:
displaying, by the electronic device, the first service card in the chat interface; and
displaying, by the electronic device, the first service card on the second service card after receiving an input performed by the user on the first service card.

7. The method according to claim 5 or 6, wherein after the displaying, by the electronic device, the first service card on the second service card, the method further comprises:
receiving, by the electronic device, a switching operation input by the user to the first service card; and
displaying, by the electronic device, the second service card on the first service card in response to the switching operation.

8. The method according to any one of claims 1 to 7, wherein the first contact is a display device added to the chat application; and when the first intent associated with the first message is a video play intent, the second intent associated with the first intent is a device remote control intent, and the second service card is a device remote control card bound to the remote control intent.

9. The method according to any one of claims 1 to 8, wherein after the obtaining, by the electronic device, a first service card corresponding to the first message, the method further comprises:
obtaining, by the electronic device, a third service card associated with the first service card, wherein the third service card is provided by a third application; and
when the electronic device displays the second service card, the method further comprises: displaying, by the electronic device, the third service card.

10. An electronic device, wherein the electronic device comprises a display (1707), a memory (1703), and one or more processors (1702); and
the memory (1703) is configured to store computer program code (1704), the computer program code (1704) comprises computer instructions; and when the computer instructions are executed by the one or more processors (1702), the electronic device is enabled to perform the method according to any one of claims 1 to 9.

11. A computer-readable storage medium, wherein the computer-readable storage medium stores instructions, and when the instructions are run on an electronic device, the electronic device is enabled to perform the service recommendation method according to any one of claims 1 to 9.

12. A computer program product, wherein when the computer program product runs on an electronic device, the electronic device is enabled to perform the service recommendation method according to any one of claims 1 to 9.

## Patentansprüche

1. Dienstempfehlungsverfahren, umfassend:
Darstellen, durch eine elektronische Vorrichtung, einer Chat-Schnittstelle (801) mit einem ersten Kontakt in einer Chat-Anwendung;
Empfangen und Darstellen, durch die elektronische Vorrichtung, einer ersten Nachricht, die durch einen Benutzer in die Chat-Schnittstelle (801) eingegeben wird;
Erlangen (S733a), durch die elektronische Vorrichtung, einer ersten Dienstkarte, die der ersten Nachricht entspricht, wobei die erste Dienstkarte einen ersten Dienst repräsentiert, der durch eine erste Anwendung bereitgestellt und in Form einer Karte dargestellt wird;
Erlangen (S753b), durch die elektronische Vorrichtung, einer zweiten Dienstkarte, die mit der ersten Dienstkarte verknüpft ist, wobei die zweite Dienstkarte einen zweiten Dienst repräsentiert, der durch eine zweite Anwendung bereitgestellt und in Form einer Karte dargestellt wird; und
Darstellen (S704), durch die elektronische Vorrichtung, der ersten Dienstkarte und der zweiten Dienstkarte in der Chat-Schnittstelle.

2. Verfahren nach Anspruch 1, wobei das Erlangen, durch die elektronische Vorrichtung, einer ersten Dienstkarte, die der ersten Nachricht entspricht, Folgendes umfasst:
wenn die erste Nachricht eine erste Absicht aufweist, Bestimmen (S713a), durch die elektronische Vorrichtung, aus N Diensten, die an die erste Absicht gebunden sind, eines ersten Dienstes, welcher der ersten Nachricht entspricht, wobei N eine Ganzzahl größer als 0 ist; und,
wenn der erste Dienst durch die erste Anwendung bereitgestellt wird, Erlangen (S723a), durch die elektronische Vorrichtung von der ersten Anwendung, der ersten Dienstkarte, die dem ersten Dienst entspricht.

3. Verfahren nach Anspruch 2, wobei das Erlangen, durch die elektronische Vorrichtung, einer zweiten Dienstkarte, die mit der ersten Dienstkarte verknüpft ist und die durch eine zweite Anwendung bereitgestellt wird, Folgendes umfasst:
Bestimmen (S713b), durch die elektronische Vorrichtung, einer zweiten Absicht, die mit der ersten Absicht verknüpft ist, wobei die zweite Absicht eine verbindliche Beziehung zu M Diensten aufweist und M eine Ganzzahl größer als 0 ist;
Bestimmen (S733b), durch die elektronische Vorrichtung aus den M Diensten, eines zweiten Dienstes, welcher der ersten Nachricht entspricht; und,
wenn der zweite Dienst durch die zweite Anwendung bereitgestellt wird, Erlangen (S743b), durch die elektronische Vorrichtung von der zweiten Anwendung, der zweiten Dienstkarte, die dem zweiten Dienst entspricht.

4. Verfahren nach Anspruch 3, wobei das Bestimmen, durch die elektronische Vorrichtung, einer zweiten Absicht, die mit der ersten Absicht verknüpft ist, Folgendes umfasst:
Senden (S702), durch die elektronische Vorrichtung, der ersten Absicht an eine voreingestellte Smart Engine, um die Smart Engine aufzufordern, die zweite Absicht, die mit der ersten Absicht verknüpft ist, zu bestimmen; oder
Senden, durch die elektronische Vorrichtung, der ersten Absicht an die erste Anwendung, um die erste Anwendung aufzufordern, die zweite Absicht, die mit der ersten Absicht verknüpft ist, zu bestimmen; oder
Senden, durch die elektronische Vorrichtung, der ersten Absicht an eine andere Vorrichtung, um die andere Vorrichtung aufzufordern, die zweite Absicht, die mit der ersten Absicht verknüpft ist, zu bestimmen.

5. Verfahren nach einem der Ansprüche 1 bis 4, wobei das Darstellen, durch die elektronische Vorrichtung, der ersten Dienstkarte und der zweiten Dienstkarte in der Chat-Schnittstelle Folgendes umfasst:
Darstellen, durch die elektronische Vorrichtung, einer Antwortnachricht auf die erste Nachricht in der Chat-Schnittstelle, wobei sich die erste Dienstkarte auf der zweiten Dienstkarte in der Antwortnachricht befindet.

6. Verfahren nach einem der Ansprüche 1 bis 4, wobei das Darstellen, durch die elektronische Vorrichtung, der ersten Dienstkarte und der zweiten Dienstkarte in der Chat-Schnittstelle Folgendes umfasst:
Darstellen, durch die elektronische Vorrichtung, der ersten Dienstkarte in der Chat-Schnittstelle; und
Darstellen, durch die elektronische Vorrichtung, der ersten Dienstkarte auf der zweiten Dienstkarte nach Empfangen einer Eingabe, die durch den Benutzer auf der ersten Dienstkarte durchgeführt wird.

7. Verfahren nach Anspruch 5 oder 6, wobei das Verfahren nach dem Darstellen, durch die elektronische Vorrichtung, der ersten Dienstkarte auf der zweiten Dienstkarte ferner Folgendes umfasst:
Empfangen, durch die elektronische Vorrichtung, eines Schaltvorgangs, der durch den Benutzer in die erste Dienstkarte eingegeben wird; und
Darstellen, durch die elektronische Vorrichtung, der zweiten Dienstkarte auf der ersten Dienstkarte als Reaktion auf den Umschaltvorgang.

8. Verfahren nach einem der Ansprüche 1 bis 7, wobei der erste Kontakt eine Darstellungsvorrichtung ist, die der Chat-Anwendung hinzugefügt worden ist; und, wenn die erste Absicht, die mit der ersten Nachricht verknüpft ist, eine Videowiedergabeabsicht ist, ist die zweite Absicht, die mit der ersten Absicht verknüpft ist, eine Vorrichtungsfernsteuerungsabsicht und die zweite Dienstkarte ist eine Vorrichtungsfernsteuerungskarte, die an die Fernsteuerungsabsicht gebunden ist.

9. Verfahren nach einem der Ansprüche 1 bis 8, wobei das Verfahren nach dem Erlangen, durch die elektronische Vorrichtung, einer ersten Dienstkarte, die der ersten Nachricht entspricht, ferner Folgendes umfasst:
Erlangen, durch die elektronische Vorrichtung, einer dritten Dienstkarte, die mit der ersten Dienstkarte verknüpft ist, wobei die dritte Dienstkarte durch eine dritte Anwendung bereitgestellt wird; und,
wenn die elektronische Vorrichtung die zweite Dienstkarte darstellt, das Verfahren ferner Folgendes umfasst: Darstellen, durch die elektronische Vorrichtung, der dritten Dienstkarte.

10. Elektronische Vorrichtung, wobei die elektronische Vorrichtung ein Display (1707), einen Speicher (1703) und einen oder mehrere Prozessoren (1702) umfasst; und
der Speicher (1703) dazu konfiguriert ist, Computerprogrammcode (1704) zu speichern, der Computerprogrammcode (1704) Computeranweisungen umfasst; und, wenn die Computeranweisungen durch den einen oder die mehreren Prozessoren (1702) ausgeführt werden, die elektronische Vorrichtung in die Lage versetzt wird, das Verfahren nach einem der Ansprüche 1 bis 9 durchzuführen.

11. Computerlesbares Speichermedium, wobei das computerlesbare Speichermedium Anweisungen speichert und, wenn die Anweisungen auf einer elektronischen Vorrichtung ausgeführt werden, es der elektronischen Vorrichtung ermöglicht wird, das Dienstempfehlungsverfahren nach einem der Ansprüche 1 bis 9 durchzuführen.

12. Computerprogrammprodukt, wobei, wenn das Computerprogrammprodukt auf einer elektronischen Vorrichtung ausgeführt wird, es der elektronischen Vorrichtung ermöglicht wird, das Dienstempfehlungsverfahren nach einem der Ansprüche 1 bis 9 durchzuführen.

## Revendications

1. Procédé de recommandation de service, comprenant :
l'affichage, par un dispositif électronique, d'une interface de messagerie instantanée (801) avec un premier contact dans une application de messagerie instantanée ;
la réception et l'affichage, par le dispositif électronique, d'un premier message saisi par un utilisateur dans l'interface de messagerie instantanée (801) ;
l'obtention (S733a), par le dispositif électronique, d'une première carte de service correspondant au premier message, dans lequel la première carte de service représente un premier service fourni par une première application et affiché sous la forme d'une carte ;
l'obtention (S753b), par le dispositif électronique, d'une deuxième carte de service associée à la première carte de service, dans lequel la deuxième carte de service représente un second service fourni par une seconde application et affiché sous la forme d'une carte ; et
l'affichage (S704), par le dispositif électronique, de la première carte de service et de la deuxième carte de service dans l'interface de messagerie instantanée.

2. Procédé selon la revendication 1, dans lequel l'obtention, par le dispositif électronique, d'une première carte de service correspondant au premier message comprend :
lorsque le premier message présente une première intention, la détermination (S713a), par le dispositif électronique à partir de N services liés à la première intention, d'un premier service correspondant au premier message, où N est un entier supérieur à 0 ; et
lorsque le premier service est fourni par la première application, l'obtention (S723a), par le dispositif électronique à partir de la première application, de la première carte de service correspondant au premier service.

3. Procédé selon la revendication 2, dans lequel l'obtention, par le dispositif électronique, d'une deuxième carte de service associée à la première carte de service et fournie par une seconde application comprend :
la détermination (S713b), par le dispositif électronique, d'une seconde intention associée à la première intention, dans lequel la seconde intention présente une relation de liaison avec M services, et M est un entier supérieur à 0 ;
la détermination (S733b), par le dispositif électronique à partir des M services, d'un second service correspondant au premier message ; et
lorsque le second service est fourni par la seconde application, l'obtention (S743b), par le dispositif électronique à partir de la seconde application, de la deuxième carte de service correspondant au second service.

4. Procédé selon la revendication 3, dans lequel la détermination, par le dispositif électronique, d'une seconde intention associée à la première intention comprend :
l'envoi (S702), par le dispositif électronique, de la première intention à un moteur intelligent prédéfini, pour demander au moteur intelligent de déterminer la seconde intention associée à la première intention ; ou
l'envoi, par le dispositif électronique, de la première intention à la première application, pour demander à la première application de déterminer la seconde intention associée à la première intention ; ou
l'envoi, par le dispositif électronique, de la première intention à un autre dispositif, pour demander à l'autre dispositif de déterminer la seconde intention associée à la première intention.

5. Procédé selon l'une quelconque des revendications 1 à 4, dans lequel l'affichage, par le dispositif électronique, de la première carte de service et de la deuxième carte de service dans l'interface de messagerie instantanée comprend :
l'affichage, par le dispositif électronique, d'un message de réponse du premier message dans l'interface de messagerie instantanée, dans lequel la première carte de service est située sur la deuxième carte de service dans le message de réponse.

6. Procédé selon l'une quelconque des revendications 1 à 4, dans lequel l'affichage, par le dispositif électronique, de la première carte de service et de la deuxième carte de service dans l'interface de messagerie instantanée comprend :
l'affichage, par le dispositif électronique, de la première carte de service dans l'interface de messagerie instantanée ; et
l'affichage, par le dispositif électronique, de la première carte de service sur la deuxième carte de service après la réception d'une saisie réalisée par l'utilisateur sur la première carte de service.

7. Procédé selon la revendication 5 ou 6, dans lequel, après l'affichage, par le dispositif électronique, de la première carte de service sur la deuxième carte de service, le procédé comprend également :
la réception, par le dispositif électronique, d'une opération de commutation saisie par l'utilisateur sur la première carte de service ; et
l'affichage, par le dispositif électronique, de la deuxième carte de service sur la première carte de service en réponse à l'opération de commutation.

8. Procédé selon l'une quelconque des revendications 1 à 7, dans lequel le premier contact est un dispositif d'affichage ajouté à l'application de messagerie instantanée ; et lorsque la première intention associée au premier message est une intention de lecture vidéo, la seconde intention associée à la première intention est une intention de commande à distance de dispositif, et la deuxième carte de service est une carte de commande à distance de dispositif liée à l'intention de commande à distance.

9. Procédé selon l'une quelconque des revendications 1 à 8, dans lequel, après l'obtention, par le dispositif électronique, d'une première carte de service correspondant au premier message, le procédé comprend également :
l'obtention, par le dispositif électronique, d'une troisième carte de service associée à la première carte de service, dans lequel la troisième carte de service est fournie par une troisième application ; et
lorsque le dispositif électronique affiche la deuxième carte de service, le procédé comprend également : l'affichage, par le dispositif électronique, de la troisième carte de service.

10. Dispositif électronique, dans lequel le dispositif électronique comprend un affichage (1707), une mémoire (1703) et un ou plusieurs processeurs (1702) ; et
la mémoire (1703) est configurée pour stocker un code de programme informatique (1704), le code de programme informatique (1704) comprend des instructions informatiques ; et, lorsque les instructions informatiques sont exécutées par les un ou plusieurs processeurs (1702), le dispositif électronique est activé pour réaliser le procédé selon l'une quelconque des revendications 1 à 9.

11. Support de stockage lisible par ordinateur, dans lequel le support de stockage lisible par ordinateur stocke des instructions, et lorsque les instructions sont exécutées sur un dispositif électronique, le dispositif électronique est activé pour réaliser le procédé de recommandation de service selon l'une quelconque des revendications 1 à 9.

12. Produit de programme informatique, dans lequel lorsque le produit de programme informatique s'exécute sur un dispositif électronique, le dispositif électronique est activé pour réaliser le procédé de recommandation de service selon l'une quelconque des revendications 1 à 9.
